# EUROPÄISCHE PATENTSCHRIFT

(11) **EP 1 322 850 B1**
(45) Veröffentlichungstag und Bekanntmachung des Hinweises auf die Patenterteilung: **04.01.2006**
(21) Anmeldenummer: 01980159.6
(22) Anmeldetag: 06.09.2001
(51) Int. Cl.: F02D 41/38, F02D 41/40

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 22.09.2000 DE 10047001
(43) Veröffentlichungstag der Anmeldung: 02.07.2003
(73) Patentinhaber: ROBERT BOSCH GMBH, 70442 Stuttgart (DE)
(72) Erfinder: GRAU, Kai-Uwe, 74196 Neuenstadt (DE)
(86) Internationale Anmeldenummer: PCT/DE2001/003414
(87) Internationale Veröffentlichungsnummer: WO 2002/025089

(56) Entgegenhaltungen:
- EP-A- 0 777 042
- EP-A- 0 886 058
- GB-A- 2 290 112
- US-A- 5 711 275
- US-A- 5 908 022

## Beschreibung

### Stand der Technik

Die vorliegende Erfindung betrifft ein Verfahren zum Betreiben einer Brennkraftmaschine insbesondere eines Kraftfahrzeugs. Dabei liegt in einen Brennraum oder in ein Ansaugrohr der Brennkraftmaschine einzuspritzender Kraftstoff in einem Druckspeicher mit einem variablen Einspritzdruck an.

Die Erfindung betrifft außerdem eine Brennkraftmaschine mit einem Druckspeicher, mindestens einem Brennraum und mindestens einem Ansaugrohr. In dem Druckspeicher liegt Kraftstoff mit einem variablen Einspritzdruck an. Der Kraftstoff aus dem Druckspeicher ist in das Ansaugrohr oder direkt in den Brennraum einspritzbar. Die Erfindung betrifft des Weiteren ein Steuergerät für eine solche Brennkraftmaschine.

Die vorliegende Erfindung betrifft außerdem ein Speicherelement für ein Steuergerät einer Brennkraftmaschine insbesondere eines Kraftfahrzeugs, auf dem ein Computerprogramm abgespeichert ist, das auf einem Rechengerät, insbesondere auf einem Mikroprozessor, ablauffähig ist. Das Speicherelement ist insbesondere als ein Read-Only-Memory, als ein Random-Access-Memory oder als ein Flash-Memory ausgebildet. Schließlich betrifft dieErfindung auch ein Computerprogramm.

Aus dem Stand der Technik ist es für direkt einspritzende Brennkraftmaschinen bekannt, den Einspritzdruck in dem Druckspeicher über ein Kennfeld vorzugeben. Das Kennfeld ist jedoch unabhängig von der Betriebstemperatur der Brennkraftmaschine. Außerdem wird das Kennfeld nicht an bestimmte Betriebszustände der Brennkraftmaschine, bspw. nach einem Kaltstart oder während einer Warmlaufphase, angepaßt.

Aus der DE 195 47 644 A1 ist es bekannt, bei direkt einspritzenden Brennkraftmaschinen zur Erhöhung der Zumessgenauigkeit der in den Brennraum einzuspritzenden Kraftstoffmasse einen Korrekturfaktor zu berechnen, mit dem die einzuspritzende Kraftstoffmasse beaufschlagt wird. Der Korrekturfaktor berücksichtigt die Temperaturabhängigkeit der Dichte des Kraftstoffs. Auf den in dem Druckspeicher anliegenden Einspritzdruck hat der Korrekturfaktor keine Auswirkung.

Der vorliegenden Erfindung liegt die Aufgabe zugrunde, einen in einem Druckspeicher anliegenden Einspritzdruck an bestimmte Betriebszustände der Brennkraftmaschine anzupassen, um in diesen Betriebszuständen einen hinsichtlich Kraftstoffverbrauch, Abgasemission und Laufruhe optimierten Betrieb der Brennkraftmaschine zu ermöglichen.

Zur Lösung dieser Aufgabe schlägt die Erfindung ausgehend von dem Verfahren zum Betreiben einer Brennkraftmaschine der eingangs genannten Art vor, dass der Einspritzdruck in dem Druckspeicher in Abhängigkeit von der Temperatur der Brennkraftmaschine eingestellt wird.

### Vorteile der Erfindung

Erfindungsgemäß wird der Einspritzdruck also in Abhängigkeit von der Temperatur der Brennkraftmaschine erhöht oder abgesenkt. Die Temperatur der Brennkraftmaschine ist zu einem großen Teil abhängig von dem Betriebszustand der Brennkraftmaschine. So liegt die Temperatur nach einem Kaltstart oder.während einer Warmlaufphase deutlich unterhalb der idealen Betriebstemperatur, die während eines längerfristigen Betriebs der Brennkraftmaschine erreicht wird.

Durch eine temperaturabhängige Einstellung des in dem Druckspeicher anliegenden Einspritzdrucks kann in besonderen Betriebszuständen der Brennkraftmaschine ein hinsichtlich Kraftstoffverbrauch, Abgasemission und Laufruhe optimierter Betrieb der Brennkraftmaschine ermöglicht werden.

Gemäß einer vorteilhaften Weiterbildung der vorliegenden Erfindung wird vorgeschlagen, dass zusätzlich zu der temperaturabhängigen Einstellung des Einspritzdrucks auch der Einspritzzeitpunkt in Abhängigkeit von der Temperatur der Brennkraftmaschine eingestellt wird.

Gemäß einer bevorzugten Ausführungsform der vorliegenden Erfindung wird vorgeschlagen, dass bei einer Temperatur der Brennkraftmaschine unterhalb der Betriebstemperatur der Brennkraftmaschine der Einspritzdruck erhöht wird. Durch die Erhöhung des Einspritzdrucks nach einem Kaltstart oder während einer Warmlaufphase führt zu einer deutlich verringerten Emission an Kohlenwasserstoffen (HC) in diesen Betriebszuständen. Außerdem führt der erhöhte Einspritzdruck zu größeren Anforderungen an eine Pumpenanordnung, die den Kraftstoff in dem Druckspeicher auf den Einspritzdruck bringt. Dadurch steigt auch die an der Brennkraftmaschine anliegende Last, was insgesamt zu einer schnelleren Erwärmung eines Abgaskatalysators führt.

Dieser erreicht so innerhalb einer kürzeren Zeit seine Betriebstemperatur, die für eine optimale Konversion der Abgase notwendig ist.

Vorteilhafterweise wird der Einspritzzeitpunkt bei einer Temperatur der Brennkraftmaschine unterhalb der Betriebstemperatur der Brennkraftmaschine zu späteren Zeitpunkten hin eingestellt. Durch diese Maßnahme kann die Erhöhung des Einspritzdrucks bei unterhalb der Betriebstemperatur liegenden Temperaturen der Brennkraftmaschine unterstützt werden.

Gemäß einer anderen vorteilhaften Weiterbildung der vorliegenden Erfindung wird vorgeschlagen, dass die Temperatur der Brennkraftmaschine anhand der Temperatur von Kühlwasser oder anhand der Temperatur eines Zylinderkopfes der Brennkraftmaschine bestimmt wird.

Gemäß einer weiteren bevorzugten Ausführungsform der vorliegenden Erfindung wird vorgeschlagen, dass ein von der Temperatur der Brennkraftmaschine abhängiger Korrekturfaktor bestimmt wird, mit dem ein nicht temperaturabhängiger Einspritz-Sollwert beaufschlagt wird. Der in dem Druckspeicher anliegende Einspritzdruck wird dann von einem Steuergerät der Brennkraftmaschine auf den korrigierten Einspritzdruck-Sollwert geregelt.

Von besonderer Bedeutung ist die Realisierung des erfindungsgemäßen Verfahrens in Form eines Speicherelements, das für ein Steuergerät einer Brennkraftmaschine insbesondere eines Kraftfahrzeugs vorgesehen ist. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft auch ein Computerprogramm, das zur Ausführung des erfindungsgemäßen Verfahrens geeignet ist, wenn es auf einem Rechengerät, insbesondere auf einem Mikroprozessor, ausgeführt wird. Besonders bevorzugt ist dabei, wenn das Computerprogramm auf einem Speicherelement, insbesondere auf einem Flash-Memory, abgespeichert ist.

Als eine weitere Lösung der Aufgabe der vorliegenden Erfindung wird ausgehend von der Brennkraftmaschine der eingangs genannten Art vorgeschlagen, dass der Einspritzdruck in dem Druckspeicher in Abhängigkeit von der Temperatur der Brennkraftmaschine einstellbar ist.

Die Brennkraftmaschine kann mit einer Saugrohreinspritzung ausgestattet sein. Gemäß einer bevorzugten Weiterbildung der vorliegenden Erfindung wird jedoch vorgeschlagen, dass die Brennkraftmaschine mindestens ein Einspritzventil zum direkten Einspritzen des in dem Druckspeicher anliegenden Kraftstoffs in dem Brennraum der Brennkraftmaschine aufweist. Die Brennkraftmaschine ist also vorzugsweise als eine direkteinspritzende Benzin- oder DieselBrennkraftmaschine ausgebildet.

Insbesondere ist daran gedacht, dass der Druckspeicher als ein Hochdruckpspeicher, bspw. als eine Speicherleiste eines Common-Rail-Kraftstoffzumesssystems, ausgebildet ist.

Schließlich wird als eine weitere Lösung der Aufgabe der vorliegenden Erfindung ausgehend von einem Steuergerät für eine Brennkraftmaschine der eingangs genannten Art vorgeschlagen, dass das Steuergerät den Einspritzdruck in dem Druckspeicher in Abhängigkeit von der Temperatur der Brennkraftmaschine einstellt.

### Zeichnungen

Weitere Merkmale, Anwendungsmöglichkeit und vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder dessen Rückbeziehung sowie unabhängig von ihrer Formulierung bzw. Darstellung in der Beschreibung bzw. in der Zeichnung.
Es zeigen:
- Figur 1: ein schematisches Blockschaltbild einer erfindungsgemäßen Brennkraftmaschine gemäß einer bevorzugten Ausführungsform; und
- Figur 2: ein Ablaufdiagramm eines erfindungsgemäßen Verfahrens gemäß einer bevorzugten Ausführungsform.

### Beschreibung der Ausführungsbeispiele

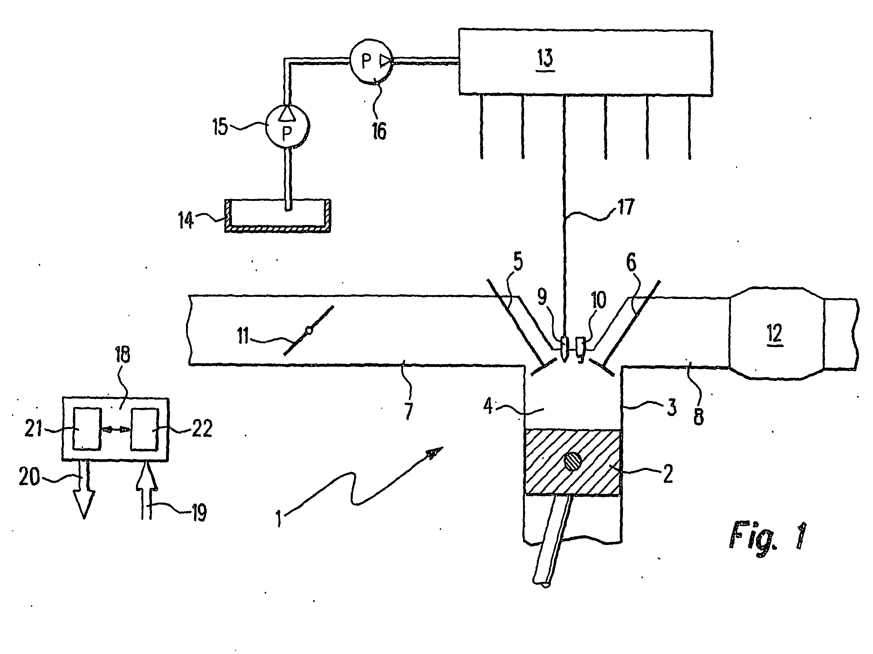

In Figur 1 ist eine erfindungsgemäße Brennkraftmaschine in ihrer Gesamtheit mit dem Bezugszeichen 1 bezeichnet. Die Brennkraftmaschine 1 weist einen Kolben 2 auf, der in einem Zylinder 3 hin und her bewegbar ist. Der Zylinder 3 ist mit einem Brennraum 4 versehen, der u.a. durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum eingespritzt werden. Mit der Zündkerze 10 kann der Kraftstoff in dem Brennraum 4 entzündet werden. Die dargestellte Brennkraftmaschine 1 ist also eine Benzin direk einspritzende (BDE) Brennkraftmaschine. Die Erfindung kann jedoch ohne weiteres auch bei Diesel Brennkraftmaschinen realisiert werden.

In dem Ansaugrohr 7 ist eine drehbare Drosselklappe 11 untergebracht, über die dem Ansaugrohr 7 Luft zuführbar ist. Die Masse der zugeführten Luft ist abhängig von der Winkelstellung der Drosselklappe 11. In dem Abgasrohr 8 ist ein Katalysator 12 untergebracht, der zur Reinigung von durch die Verbrennung des Kraftstoffs entstehenden Abgasen dient.

Der Kolben 2 wird durch die Verbrennung des Kraftstoffs in dem Brennraum 4 in eine Hin- und Herbewegung versetzt, die auf eine nicht dargestellte Kurbelwelle übertragen wird und auf diese ein Drehmoment ausübt.

Der über das Einspritzventil 9 in dem Brennraum 4 eingespritzte Kraftstoff gelangt über eine Kraftstoffleitung 17 von dem Hochdruckspeicher 13 zu dem Einspritzventil 9. Die Brennkraftmaschine 1 weist außer dem in Figur 1 dargestellten Zylinder 3 noch fünf weitere Zylinder auf, denen ebenfalls Kraftstoff aus dem Hochdruckspeicher 13 zugeführt wird, die jedoch nicht dargestellt sind. Der Hochdruckspeicher 13 ist als eine Speicherleiste eines Common-Rail-Kraftstoffzumesssystems ausgebildet. Der Kraftstoff liegt mit einem variablen Einspritzdruck in dem Druckspeicher 13 an. Aus einem Kraftstofftank 14 wird Kraftstoff mittels einer Vorförderpumpe 15 zu einer Hochdruckpumpe 16 gefördert, die den Kraftstoff weiter in den Druckspeicher 13 fördert. Der in dem Druckspeicher 13 herrschende Einspritzdruck kann durch eine geeignete Ansteuerung der Hochdruckpumpe 16 oder von Druck in dem Druckspeicher 13 angeordneten Druckregelventilen (nicht dargestellt) freigestellt werden.

Ein Steuergerät 18 der Brennkraftmaschine 1 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassen-Sensor, einem Lamda-Sensor, einem DrehzahlSensor, einem Motortemperatursensor und dgl, verbunden. Das Steuergerät 18 erzeugt Ausgangssignale 20, mit denen über Aktoren bzw. Steller das Verhalten der Brennkraftmaschine 1 beeinflußt werden kann. Beispielsweise ist das Steuergerät 18 mit dem Einspritzventil 9, der Zündkerze 10, der Drosselklappe 11 und der Hochdruckpumpe 16 und dgl. verbunden und erzeugt die zu deren Ansteuerung erforderlichen Ansteuersignale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in dem Brennraum 4 eingespritzte Kraftstoffmasse von dem Steuergerät 18 insbesondere im Hinblick auf einen geringen Kraftstoffverbrauch und/oder eine geringe Schadstoffemission gesteuert und/oder geregelt. Zu diesem Zweck ist das Steuergerät 18 mit einem Mikroprozessor 21 versehen, auf dem ein Computerprogramm ablaufen kann, das zur Ausführung der genannten Steuerung und/oder Regelung geeignet ist. Das Computerprogramm ist in einem Speicherelement 22 gespeichert. Das Speicherelement 22 ist bspw. als ein elektrisches Speichermedium, insbesondere als ein Flash-Memory, ausgebildet.

Die Brennkraftmaschine 1 kann in einer Vielzahl von Betriebsarten betrieben werden. So ist es möglich, die Brennkraftmaschine 1 in einem homogenen Betrieb, einem Schichtbetrieb, einem homogenen Magerbetrieb, einem Betrieb zum Heizen des Katalysators, einem Betrieb zur Entschwefelung des Katalysators oder einem Betrieb zur Stickoxyd-Regenerierung des Katalysators zu betreiben.

Das Steuergerät 18 steuert bzw. regelt auch den in dem Druckspeicher 13 anliegenden Einspritzdruck. Dazu ist auf dem Speicherelement 22 ein weiteres Computerprogramm abgespeichert, das auf den Mikroprozessor 21 ablauffähig und zur Ausführung des erfindungsgemäßen Verfahrens geeignet ist.

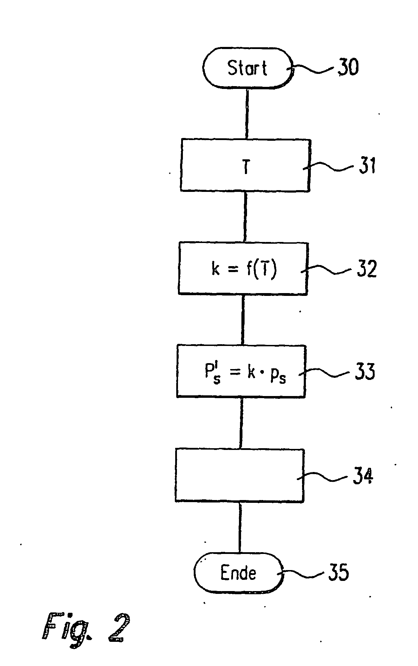

In Figur 2 ist ein Ablaufdiagramm des erfindungsgemäßen Verfahrens dargestellt. Es beginnt in einem Funktionsblock 30. In einem Funktionsblock 31 wird die Temperatur der Brennkraftmaschine 1 bspw. anhand der Temperatur T' des Kühlwassers oder der Temperatur T' eines Zylinderkopfes ermittelt.

Dann wird in einem Funktionsblock 32 ein Korrekturfaktor k ermittelt, der abhängig ist von der Temperatur T der Brennkraftmaschine 1. In einem Funktionsblock 33 wird dann ein korrigierter Einspritz-Solldruck p_s aus dem Produkt des temperaturabhängigen Korrekturfaktors k und eines nicht temperaturabhängigen Einspritzdruck-Sollwertes p_s ermittelt. Dieser korrigierte Einspritzdruck-Sollwert p_s wird dann einer Steuerung oder Regelung des in dem Druckspeicher 13 herrschenden Einspritzdrucks (Funktionsblock 34) zugeführt. Der in dem Druckspeicher 13 anliegende Einspritzdruck wird also auf den korrigierten Einspritzdruck-Sollwert p-s geregelt bzw. gesteuert. In einem Funktionsblock 35 ist das erfindungsgemäße Verfahren beendet.

Durch das erfindungsgemäße Verfahren kann der in dem Druckspeicher 13 anliegende Einspritzdruck in Abhängkeit von der Temperatur T der Brennkraftmaschine 1 erhöht oder abgesenkt werden. In bestimmten Betriebszuständen der Brennkraftmaschine 1, bspw. nach einem Kaltstart oder während einer Warmlaufphase, wird der Einspritzdruck erhöht. Zusätzlich kann die Einspritzung zu späten Zeitpunkten hin verschoben werden. Dadurch ergibt sich während dieser Betriebszustände eine besonders niedrige Kohlenwasserstoff (HC)-Emission im Abgas.

Um den erhöhten Einspritzdruck in den Druckspeicher 13 zu erzielen, erhöht sich die an der Hochdruckpumpe 16 und damit auch die an der Brennkraftmaschine 1 anliegende Last, was zu einer schnelleren Erwärmung des Katalysators 12 führt. Dieser erreicht somit nach einem Kaltstart oder während einer Warmlaufphase seine Betriebstemperatur, die für eine wirksame Abgaskonvertierung erforderlich ist, wesentlich schneller.

## Patentansprüche

1. Verfahren zum Betreiben einer Brennkraftmaschine (1) insbesondere eines Kraftfahrzeugs, wobei in einen Brennraum (4) oder in ein Ansaugrohr (7) der Brennkraftmaschine (1) einzuspritzender Kraftstoff in einem Druckspeicher (13) mit einem variablen Einspritzdruck (p) anliegt, wobei der Einspritzdruck (p) in dem Druckspeicher (13) in Abhängigkeit von der Temperatur (T) der Brennkraftmaschine (1) eingestellt wird, **dadurch gekennzeichnet, dass** der Einspritzzeitpunkt in Abhängigkeit von der Temperatur (T) der Brennkraftmaschine (1) eingestellt wird, wobei der Einspritzzeitpunkt bei einer Temperatur (T) der Brennkraftmaschine (1) unterhalb der Betriebstemperatur der Brennkraftmaschine (1) zu späteren Zeitpunkten hin eingestellt wird.

2. Verfahren nach Anspruch 1, **dadurch gekennzeichnet, dass** bei einer Temperatur (T) der Brennkraftmaschine (1) unterhalb der Betriebstemperatur der Brennkraftmaschine (1) der Einspritzdruck (p) erhöht wird.

3. Verfahren nach Anspruch 1 oder 2, **dadurch gekennzeichnet, dass** die Temperatur (T) der Brennkraftmaschine (1) anhand der Temperatur (T') von Kühlwasser oder anhand der Temperatur (T') eines Zylinderkopfes der Brennkraftmaschine (1) bestimmt wird.

4. Verfahren nach einem der Ansprüche 1 bis 3, **dadurch gekennzeichnet, dass** ein von der Temperatur (T) der Brennkraftmaschine (1) abhängiger Korrekturfaktor (k) bestimmt wird, mit dem ein nicht temperaturabhängiger Einspritzdruck-Sollwert (p-s) beaufschlagt wird.

5. Speicherelement (22), insbesondere Read-Only-Memory, Random-Access-Memory oder Flash-Memory, für ein Steuergerät (18) einer Brennkraftmaschine (1) insbesondere eines Kraftfahrzeugs, auf dem ein Computerprogramm abgespeichert ist, das auf einem Rechengerät, insbesondere auf einem Mikroprozessor (21), ablauffähig und eine Verfahren nach einem der Ansprüche 1 bis 4 ausführt.

6. Computerprogramm, **dadurch gekennzeichnet, dass** es ein Verfahren nach einem der Ansprüche 1 bis 4, ausführt, wenn es auf einem Rechengerät, insbesondere auf einem Mikroprozessor (21), abläuft.

7. Computerprogramm nach Anspruch 6, **dadurch gekennzeichnet, dass** es auf einem Speicherelement (22), insbesondere auf einem Flash-Memory, abgespeichert ist.

8. Steuergerät (18) für eine Brennkraftmaschine (1) mit einem Druckspeicher (13), mindestens einem Brennraum (4) und mindestens einem Ansaugrohr (7), wobei in dem Druckspeicher (13) Kraftstoff mit einem variablen Einspritzdruck (p) anliegt und der Kraftstoff aus dem Druckspeicher (13) direkt in den Brennraum (4) oder in das Ansaugrohr (7) einspritzbar ist, wobei das Steuergerät (18) den Einspritzdruck (p) in dem Druckspeicher (13) in Abhängigkeit von der Temperatur (T) der Brennkraftmaschine (1) einstellt, **dadurch gekennzeichnet, dass** das Steuergerät (18) den Einspritzzeitpunkt in Abhängigkeit von der Temperatur (T) der Brennkraftmaschine (1) einstellt, wobei das Steuergerät (18) den Einspritzzeitpunkt bei einer Temperatur (T) der Brennkraftmaschine (1) unterhalb der Betriebstemperatur der Brennkraftmaschine (1) zu späteren Zeitpunkten hin einstellt.

## Claims

1. Method for operating an internal combustion engine (1), in particular of a motor vehicle, in which fuel which is to be injected into a combustion chamber (4) or into an intake pipe (7) of the internal combustion engine (1) is present in a pressure reservoir (13) with a variable injection pressure (p), the injection pressure (p) in the pressure reservoir (13) being set as a function of the temperature (T) of the internal combustion engine (1), **characterized in that** the injection instant is set as a function of the temperature (T) of the internal combustion engine (1), the injection instant being set toward later instants if the temperature (T) of the internal combustion engine (1) is below the operating temperature of the internal combustion engine (1).

2. Method according to Claim 1, **characterized in that** the injection pressure (p) is increased if the temperature (T) of the internal combustion engine (1) is below the operating temperature of the internal combustion engine (1).

3. Method according to Claim 1 or 2, **characterized in that** the temperature (T) of the internal combustion engine (1) is determined on the basis of the temperature (T') of cooling water or on the basis of the temperature (T') of a cylinder head of the internal combustion engine (1).

4. Method according to one of Claims 1 to 3, **characterized in that** a correction factor (k) which is dependent on the temperature (T) of the internal combustion engine (1) and is applied to an injection pressure desired value (p-s), which is not temperature-dependent, is determined.

5. Memory element (22), in particular read-only memory, random access memory or flash memory, for a control unit (18) of an internal combustion engine (1), in particular of a motor vehicle, on which is stored a computer programme which can run on a computer unit, in particular on a microprocessor (21), and carries out a method according to one of Claims 1 to 4.

6. Computer programme, **characterized in that** it carries out a method according to one of Claims 1 to 4 when it runs on a computer unit, in particular on a microprocessor (21).

7. Computer programme according to Claim 6, **characterized in that** it is stored on a memory element (22), in particular on a flash memory.

8. Control unit (18) for an internal combustion engine (1) having a pressure reservoir (13), at least one combustion chamber (4) and at least one intake pipe (7), fuel with a variable injection pressure (p) being present in the pressure reservoir (13), and it being possible for the fuel to be injected from the pressure reservoir (13) directly into the combustion chamber (4) or into the intake pipe (7), the control unit (18) setting the injection pressure (p) in the pressure reservoir (13) as a function of the temperature (T) of the internal combustion engine (1), **characterized in that** the control unit (18) sets the injection instant as a function of the temperature (T) of the internal combustion engine (1), the control unit (18) setting the injection instant towards later instants if the temperature (T) of the internal combustion engine (1) is below the operating temperature of the internal combustion engine (1).

## Revendications

1. Procédé pour faire fonctionner un moteur à combustion interne (1) appartenant notamment à un véhicule automobile, selon lequel du carburant à injecter dans une chambre de combustion (4) ou dans une conduite d'admission (7) du moteur à combustion interne (1) se trouve dans un accumulateur de pression (13) à pression d'injection (p) variable, la pression d'injection (p) de l'accumulateur de pression (13) étant réglée en fonction de la température (T) du moteur à combustion interne (1),
**caractérisé en ce qu'**
on règle le point d'injection en fonction de la température (T) du moteur à combustion interne (1), le point d'injection étant réglé en retard lorsque la température (T) du moteur à combustion interne (1) est inférieure à la température de fonctionnement du moteur à combustion interne (1).

2. Procédé selon la revendication 1,
**caractérisé en ce que**
lorsqu'une température (T) du moteur à combustion interne (1) est inférieure à la température de fonctionnement du moteur à combustion interne (1), on augmente la pression d'injection (p).

3. Procédé selon la revendication 1 ou 2,
**caractérisé en ce que**
la température (T) du moteur à combustion interne (1) est déterminée à l'aide de la température (T') de l'eau de refroidissement ou à l'aide de la température (T') d'une culasse du moteur à combustion interne (1).

4. Procédé selon l'une des revendications 1 à 3,
**caractérisé en ce qu'**
il est déterminé un facteur de correction (k) fonction de la température (T) du moteur à combustion interne (1) auquel est soumise une valeur de consigne de la pression d'injection (p-s) dépendante de la température.

5. Elément de mémoire (22), notamment mémoire morte, mémoire vive ou mémoire flash pour dispositif de commande (18) d'un moteur à combustion interne (1) appartenant notamment à un véhicule automobile, dans lequel est enregistré un programme informatique qui peut être mis en oeuvre sur un appareil informatique, notamment un microprocesseur (21) et qui peut exécuter un procédé selon l'une des revendications 1 à 4.

6. Programme informatique,
**caractérisé en ce qu'**
il exécute un procédé selon l'une des revendications 1 à 4 lorsqu'il est mis en oeuvre sur un appareil informatique, notamment un microprocesseur (21).

7. Programme informatique selon la revendication 6,
**caractérisé en ce qu'**
il est enregistré dans un élément de mémoire (22), notamment une mémoire flash.

8. Dispositif de commande (18) pour moteur à combustion interne (1) comportant un accumulateur de pression (13), au moins une chambre de combustion (4) et au moins une conduite d'admission (7), dans lequel du carburant qui se trouve dans un accumulateur de pression (13) à pression d'injection (p) variable est injectable directement dans une chambre de combustion (4) ou dans une conduite d'admission (7) à partir de l'accumulateur de pression (13), le dispositif de commande (18) réglant la pression d'injection (p) de l'accumulateur de pression (13) en fonction de la température (T) du moteur à combustion interne (1),
**caractérisé en ce que**
le dispositif de commande (18) règle le point d'injection en fonction de la température (T) du moteur à combustion interne (1), le dispositif de commande (18) réglant le point d'injection en retard lorsque la température (T) du moteur à combustion interne (1) est inférieure à sa température de fonctionnement.
